# EUROPÄISCHE PATENTANMELDUNG

(11) **EP 1 717 442 A2**
(43) Veröffentlichungstag der Anmeldung: **02.11.2006**
(21) Anmeldenummer: 06112016.8
(22) Anmeldetag: 30.03.2006
(51) Int. Cl.: F03B 3/06, F03B 11/00, F03B 3/14

(54) **Kaplan-Turbine**

(30) Priorität: 26.04.2005 AT 2612005 U
(71) Anmelder: Jank, Siegfried, 5222 Jeging (AT)
(72) Erfinder: Jank, Siegfried, 5222 Jeging (AT)
(74) Vertreter: KLIMENT & HENHAPEL

(57) **Zusammenfassung**

Unerwünschte Wasseransammlungen im generatorseitigen Gehäusebereich einer Kaplan-Turbine können zu Korrosion und zu elektrischen Defekten führen. Um einen Turbinenwellenraum (13) von eindringendem Wasser freizuhalten, wurde an der Laufradnabe (5) mindestens ein Entlastungskanal (7) vorgesehen, welcher sich von der der Turbinenwelle (3) zugeneigten, gegenüber dem Einlaufkanal (1) abgedichteten Laufradnabenseite (9) zu der ins Saugrohr (2) mündenden unteren Laufradnabenseite (10) erstreckt. Da auf der Seite stromabwärts des Laufrades (12) auch in Stillstandszeiten der Turbine permanenter Unterdruck herrscht, wird im Turbinenwellenraum (13) befindliche Flüssigkeit automatisch durch den mindestens einen Entlastungskanal (7) stromabwärts abgeführt.

## Beschreibung

Derartige Kaplan-Turbinen werden zur Energiegewinnung vor allem an Flüssen eingesetzt, bei denen große Wassermengen (>1 m3/s) bei kleinem Gefälle (2 bis 65 m) und somit geringem Wasserdruck zur Verfügung stehen. Sie sind daher prädestiniert für große Flusskraftwerke an ruhig und in ebenem Gelände fließenden Großgewässern.

Entsprechend dem bereits bekannten Prinzip wird hierbei auf einer drehbaren Welle, die in Strömungsrichtung liegt, eine flügelförmig profilierte Laufschaufel montiert, die gegen die Strömung des Wassers angestellt wird. Die dadurch entstehenden unterschiedlichen Druckverhältnisse auf den beiden Seiten der Laufschaufel versetzen die Welle in Rotation. Je nach Einsatzbereich bilden drei bis sechs Laufschaufeln ein Laufrad, durch welches in der Folge ein mit der Turbine gekoppelter Generator betrieben wird, der die mechanische Rotationsenergie in elektrische Energie umwandelt.

Die Kaplan-Turbine wird meist, aber nicht ausschließlich, vertikal montiert und besitzt verstellbare Laufschaufeln, die entsprechend den Schwankungen der Wasserführung und des Gefälles mit Servomotoren gesteuert werden können.

Die Turbine wird also von oben nach unten in Richtung eines Saugrohres durchströmt, wobei zur Steigerung des Wirkungsgrades an der Seite eines Einlaufkanals ein Leitapparat angebracht sein kann, der die einströmenden Wassermassen in einen Drall versetzt und optimiert auf die Laufschaufeln lenkt. Im Falle der Vorsehung eines Leitapparates ist dieser fest an der Innenseite eines Turbinengehäuses angebracht und besitzt jalousieartige Leitschaufeln, welche ebenfalls verstellbar sind (doppelt regulierbare Kaplanturbine).

Ein beim Turbinenbetrieb auftauchendes Problem ist jedoch die Tatsache, dass auf der Seite des Einlaufkanals, also auf der Druckseite, keine vollkommene Abdichtung des zum Generator führenden Turbinenwellenraumes gegen eindringende Flüssigkeit gewährleistet werden kann. Diese Problematik existiert vor allem bei einfach regulierten Kaplanturbinen, also ohne Leitapparat, welcher mit Leitschaufeln in Sperrstellung das Wasser von der Turbine größtenteils fernzuhalten vermag.

In der Praxis dringt durch die an der oberen Laufradnabenkante angebrachten Absperrschieber und Labyrinthdichtungen stets ein gewisses Quantum an Wasser, welches nach dem aktuellen Stand der Technik mittels geeigneter Maßnahmen wie Pumpen oder sonstiger Prinzipien zum Fördern von Flüssigkeit abgeführt werden muss.

Diese zusätzlichen Maßnahmen stellen einen Mehraufwand an notwendigen Vorrichtungen dar, welche ihrerseits einer eigenen Kontrolle und Wartung bedürfen, um das Risiko eines eventuellen Versagens der dabei eingesetzten Sensortechnik zum Registrieren des Leckwassers zu eliminieren.

Aus der JP 2002 327675 A ist eine Turbinenanlage bekannt, welche eine mit gegenüber dem Einlaufkanal des Turbinengehäuses geöffneten Entlastungskanälen versehene Laufradnabe besitzt. Selbige Entlastungskanäle erstrecken sich vom Einlaufkanal ausgehend über eine innerhalb der Laufradnabe vorgesehene Kammer bis zur Saugrohrseite und dienen dazu, eine Abrasion der Anlage durch im Wasser mitgeführte Erde und Sand zu verhindern. Eine Abfuhrmöglichkeit von in den Turbinenwellenraum eindringendem Leckwasser ist in der JP 2002 327675 A nicht offenbart.

Der vorliegenden Erfindung liegt daher die Aufgabe zugrunde, die geschilderten Nachteile zu vermeiden und eine einfache Vorrichtung zum Abführen von aus dem Einlaufkanal zur Seite der Turbinenwelle in den Turbinenwellenraum eindringendem Leckwasser zu schaffen, welche die ungewünschte Flüssigkeit automatisch abführt und diese Aufgabe ohne weiteren Einsatz von elektrischer Energie, Sensoren, Pumpvorrichtungen oder sonstigen Prozessen, denen äußere Energie zugeführt werden muss, erfüllt.

Diese Aufgabe wird durch eine Vorrichtung mit den kennzeichnenden Merkmalen des Anspruchs 1 gelöst. Um dem oben geschilderten Problem zu begegnen, ist an der Laufradnabe mindestens ein Entlastungskanal vorgesehen, welcher sich von der der Turbinenwelle zugeneigten, gegenüber dem Einlaufkanal abgedichteten Laufradnabenseite zu der ins Saugrohr mündenden unteren Laufradnabenseite erstreckt.

Da auf der Seite des Saugrohrs, also der Seite stromabwärts des Laufrades, auch in Stillstandszeiten der Turbine permanenter Unterdruck herrscht, wird im Turbinenwellenraum befindliche Flüssigkeit ganz automatisch durch den mindestens einen Entlastungskanal stromabwärts abgeführt.

Unerwünschte Wasseransammlungen im Turbinenwellenraum, welche zu Korrosion an Turbinenwelle und Gehäuse und zu elektrischen Defekten führen können, werden durch diese Maßnahme zuverlässig vermieden.

Die kennzeichnenden Merkmale des Anspruchs 2 erlauben eine vereinfachte rotationssymmetrische Fertigung der Laufradnabe.

Ebenso ergeben sich durch die kennzeichnenden Merkmale der Ansprüche 3 und 4 Vorteile bei der spanabhebenden oder gusstechnischen Fertigung der solcherart mit Entlastungskanälen versehenen Laufradnabe.

Die Erfindung wird nun anhand eines Ausführungsbeispiels näher erläutert. Dabei zeigt:
- Fig.1: eine Schnittdarstellung einer Kaplan-Turbine mit gekrümmtem Einlaufkanal und Leitapparat
- Fig.2: eine Schnittdarstellung einer Kaplan-Turbine ohne Leitapparat

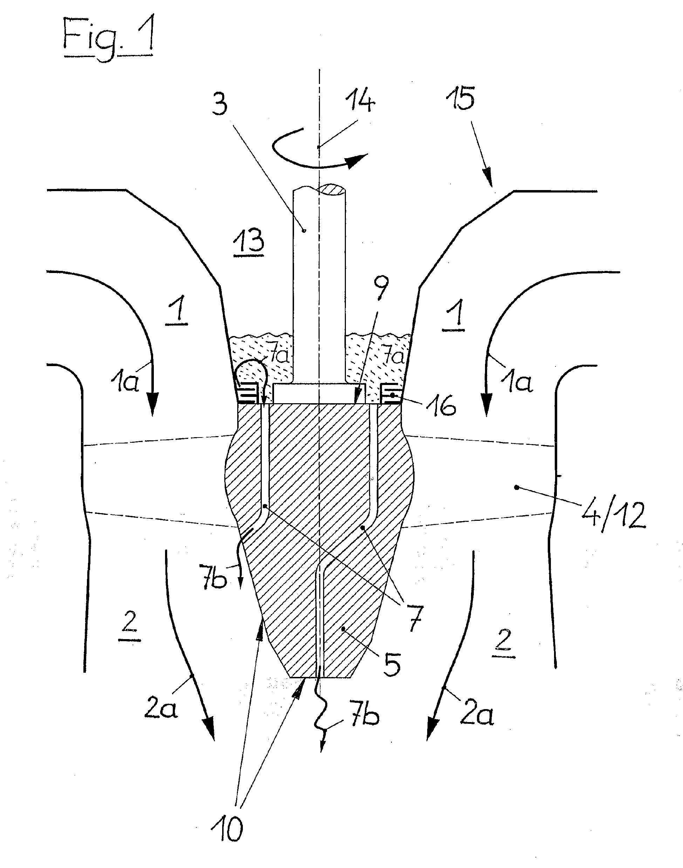

In Fig.1 wird eine vertikal montierte Kaplan-Turbine dargestellt, wie sie zum Antrieb von Generatoren in Wasserkraftwerken üblicherweise Einsatz findet.

Dabei ist ein Turbinengehäuse 15 vorgesehen, welches einen Einlaufkanal 1 und einen Austrittskanal, im folgenden als Saugrohr 2 bezeichnet, aufweist. Die erfindungsgemäße Anlage umfasst weiters eine Turbinenwelle 3, mehrere Laufschaufeln 4, welche gemeinsam ein Laufrad 12 bilden und eine Laufradnabe 5 mit sie erfindungsgemäß durchsetzenden Entlastungskanälen 7. An der Laufradnabe 5 wird eine wellenseitige Laufradnabenseite 9 und eine saugrohrseitige Laufradnabenseite 10 unterschieden.

In der Zeichnung nicht dargestellt sind die Leitschaufeln des Leitapparats, welche zur Steigerung des Wirkungsgrades der Turbine im Einlaufkanal 1 angebracht sind, wodurch die einströmenden Wassermassen in einen Drall versetzt werden und das Wasser parallel zur Turbinenwelle 3 auf die Laufschaufeln 4 auftrifft. Die Leitschaufeln sind fest an der Innenseite des Turbinengehäuses 15 angebracht, und sind ebenso wie die Laufschaufeln 4 mittels Servomotoren verstellbar (doppelt regulierbare Kaplanturbine).

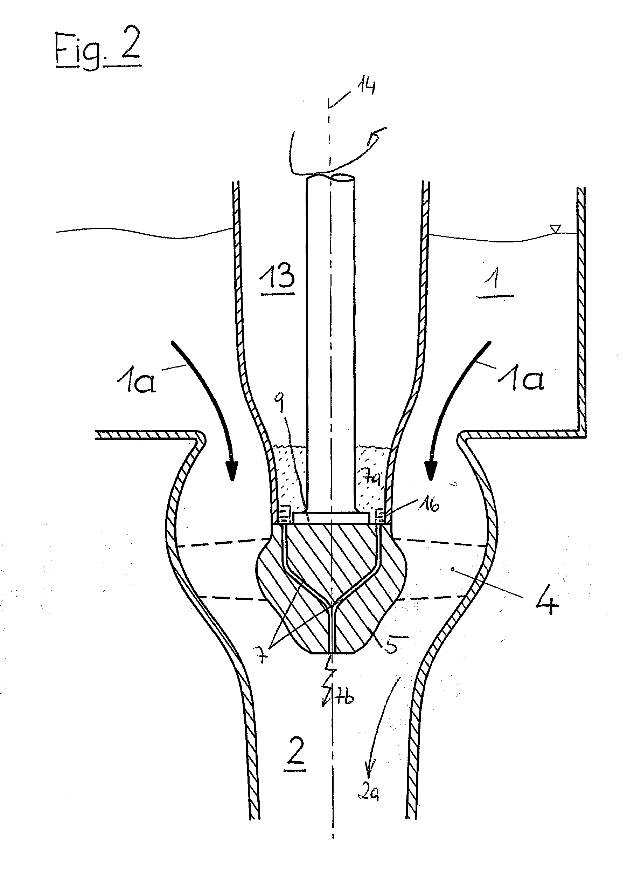

Es sind jedoch auch Anlagen mit Kaplanturbinen bekannt, die keinen Leitapparat aufweisen. Eine solche einfach regulierte Kaplanturbine mit direkt auf die Laufschaufeln 4 strömendem Wasserzufluss 1a ist in Fig.2 schematisch dargestellt. Ansonsten gelten die in Fig.1 ausgeführten Detaillierungen vom Prinzip her genauso für diese Ausführungsvariante mit dem Unterschied, dass bei doppelt regulierbaren Kaplanturbinen im lastlosen Zustand die Leitschaufeln als Absperrorgane verwendet werden können. Diese Möglichkeit besteht bei einfach regulierbaren Kaplanturbinen nicht, weswegen sie im lastlosen Zustand anfälliger für Leckwassereintritt in den Turbinenwellenraum 13 sind.

Zwischen der oberen Wandung des Einlaufkanals 1 und der wellenseitigen Laufradnabenseite 9 sind vorzugsweise Labyrinthdichtungen 16 angebracht, die ein Eindringen von Wasser in den Turbinenwellenraum 13, welcher in Folge zum (nicht dargestellten) Generator führt, verhindern sollen (siehe Fig.1).

Der Strömungsverlauf des auf die Laufschaufeln 4 auftreffenden und diese in Drehung versetzenden Wassers ist durch Pfeile 1a (Wasserzufluss) und 2a (Wasserabfluss) dargestellt.

Die Kaplan-Turbine arbeitet mit Überdruck und weist demzufolge an der Seite des Saugrohrs 2 bzw. des Wasserabflusses 2a einen ständigen Unterdruck auf, welcher auch bei Turbinenstillstand besteht.

Da ein unerwünschtes Eindringen von Flüssigkeit (Leckwasser) in den Turbinenwellenraum 13 trotz der Vorsehung einer solchen Abdichtung, vor allem in Zeiten, an denen die Turbine im Teillastbereich fährt bzw. sich im lastlosen Zustand befindet, nicht verhindert werden kann, müssen bei Anlagen nach dem Stand der Technik zusätzliche Maßnahmen ergriffen werden. Das Abführen des Leckwassers im Turbinenwellenraum 13 bedarf dann des Einsatzes von Pumpen oder anderer Vorrichtungen nach dem Saugheberprinzip.

Um solche externen Maßnahmen, die wiederum eines eigenen Regelmechanismus und gesonderter Wartung bedürfen, vollkommen entbehrlich zu machen, ist erfindungsgemäß die Laufradnabe 5 mit Entlastungskanälen 7 durchsetzt, welche von der wellenseitigen Laufradnabenseite 9 zur saugrohrseitigen Laufradnabenseite 10 verlaufen. Das Leckwasser, welches sich an der mit 7a bezeichneten Stelle sammelt, wird durch diese Entlastungskanäle 7 aufgrund des im Saugrohr 2 herrschenden Unterdrucks abgesaugt und tritt an den Stellen 7b wieder aus der Laufradnabe 5 aus, wo es in den Durchsatz des Gesamtstromes mündet und sich mit diesem vereinigt.

Fertigungstechnisch lassen sich die Entlastungskanäle 7 auf vielerlei Weise herstellen. Lösungen durch Vorsehung beim Gießen als auch durch Bohren oder andere spanabhebende Verfahren sind denkbar. Auch ein nachträgliches Anbringen von Bohrungen nach dem oben beschriebenen Prinzip an bereits bestehenden Anlagen kann unter Umständen möglich und sinnvoll sein.

Bevorzugte Ausführungsvarianten bei der Anordnung von Entlastungskanälen 7 sind ein zumindest abschnittsweiser Verlauf entlang einer Laufradnabenachse 14 oder eine Mündung an dieser.

Die Entlastungskanäle 7 können jedoch in beliebiger Weise angeordnet sein, sowohl in symmetrischer als auch in asymmetrischer Form und in willkürlicher Höhe an der Laufradnabenoberfläche münden.

In einer weiteren bevorzugten Ausführungsform enden mehrere Entlastungskanäle 7 in einer gemeinsamen Mündung an der saugrohrseitigen Laufradnabenseite 10, vorzugsweise in deren Mitte. Bei einer solchen Anordnung kann eine zentrale Bohrung entlang der Laufradnabenachse 14 erfolgen, in welche mehrere kleinere Bohrungen seitens der wellenseitigen Laufradnabenseite 9 sternförmig einmünden.

## Patentansprüche

1. Kaplanturbineneinheit, umfassend eine Turbinenwelle (3), eine Laufradnabe (5), sowie mehrere Laufschaufeln (4), welche gemeinsam mit der Laufradnabe (5) ein Laufrad (12) bilden, sowie einen Einlaufkanal (1) und ein Saugrohr (2), **dadurch gekennzeichnet, dass** in der Laufradnabe (5) mindestens ein Entlastungskanal (7) vorgesehen ist, der sich von einer turbinenwellenseitigen, gegenüber dem Einlaufkanal (1) abgedichteten Laufradnabenseite (9) zu einer saugrohrseitigen Laufradnabenseite (10) erstreckt.

2. Kaplanturbineneinheit nach Anspruch 1, **dadurch gekennzeichnet, dass** mindestens ein Entlastungskanal (7) zumindest abschnittsweise entlang der Laufradnabenachse (14) verläuft.

3. Kaplanturbineneinheit nach Anspruch 1, **dadurch gekennzeichnet, dass** die Entlastungskanäle (7) symmetrisch zur Laufradnabenachse (14) verlaufen.

4. Kaplanturbineneinheit nach einem der Ansprüche 1 oder 3, **dadurch gekennzeichnet, dass** mehrere Entlastungskanäle (7) in einer gemeinsamen Mündung an einer saugrohrseitigen Laufradnabenseite (10), vorzugsweise in deren Mitte enden.
